# EUROPEAN PATENT SPECIFICATION

(11) **EP 3 792 625 B1**
(45) Date of publication and mention of the grant of the patent: **30.10.2024**
(21) Application number: 20195655.4
(22) Date of filing: 11.09.2020
(51) Int. Cl.: G01N 29/07, G01N 29/11

(54) **VACUUM PUMP OR LINE AND METHOD FOR MONITORING A DEPOSITION OF BY-PRODUCTS**
VAKUUMPUMPE ODER VAKUUMLEITUNG SOWIE VERFAHREN ZUR ÜBERWACHUNG EINER ABSCHEIDUNG VON NEBENPRODUKTEN
POMPE OU TUYAU SOUS VIDE ET PROCÉDÉ DE SURVEILLANCE D'UN DÉPÔT DE SOUS-PRODUITS

(30) Priority: 16.09.2019 FR 1910187
(43) Date of publication of application: 17.03.2021
(73) Proprietor: PFEIFFER VACUUM, 74000 Annecy (FR); PFEIFFER VACUUM GMBH, 35614 Asslar (DE)
(72) Inventor: KAMBARA, Hisanori, 74000 ANNECY (FR); WIELSCH, Pascal, 35390 Giessen (DE); BIRKENFELD, Maximilian, 35649 BISCHOFFEN (DE)
(74) Representative: Innovincia

(56) References cited:
- WO-A1-2018/164013
- JP-A- H06 283 449
- US-A1- 2003 033 870
- EL MOUSSAOUI M ET AL: "Guided wave attenuation due to deposits on the pipe wall", ULTRASONICS SYMPOSIUM, 2005 IEEE ROTTERDAM, THE NETHERLANDS 18-21 SEPT. 2005, PISCATAWAY, NJ, USA,IEEE, vol. 2, 18 September 2005 (2005-09-18), pages 1007 - 1010, XP010898978, ISBN: 978-0-7803-9382-0

## Description

The present invention relates to a vacuum pump or vacuum line. The invention also relates to a method for monitoring a deposition of by-products.

In vacuum applications, pumps have to convey various types of gases and evaporated substances. As different substances have to be transported through the vacuum pump, materials might deposit on the inner surfaces of the pump, due to changes in pressure or temperature conditions. These by-products could be solid, polymer or dust-like. These deposits might reduce the vacuum pumps performances, in particular because they reduce the gas passage's cross-section.

Moreover, in most applications in semiconductor or thin film deposition industry, the process gases comprise aggressive substances which may react with the metallic parts of the vacuum pump, especially at the exhaust. The reactive halogens (like SF₆, Cl₂ or HBr) or acid gases used in said applications might cause corrosion inside the vacuum pump and might have a very negative influence on the performance of the vacuum system.

This is even worse in turbomolecular pumps, wherein such deposit or corrosion, might involve a rapid seizure of the pump, because the high speed rotating parts can have contact with the static parts due to the by-product deposition inside the pump.

This deposition may occur in all parts in contact with process gas. The high pressure section of the turbomolecular pump has more favorable condition to accumulate undesired deposition. This could also be found in other parts of the vacuum system like in the roughing vacuum pump or in the vacuum piping line. The deposition involves a reduction of the size of the pathway and thus, an increase in pressure which can cause, in a cascade effect, even more by-product deposition.

Therefore, it is a requirement for multiple vacuum applications, especially in semiconductor industry or in thin film deposition processes, to monitor the by-product deposits inside the vacuum apparatus.

Many different sensor technologies are known to monitor such deposits and its layer thickness inside of a vacuum pipe or other hollow bodies or vacuum pumps.

For example, a first known method consists in monitoring the motor current of the vacuum pump in order to determine a possible presence of by-product affecting the pumping performance. The evolution of the motor current or magnetically levitated rotor positions may provide information on the amount of deposits in the vacuum pumps. However, this strategy might be not accurate enough to determine the amount or the nature of the deposited materials.

Beside this, other by-product detection technologies use temperature or pressure measurements. However, these strategies generally need to implement dedicated sensors that may be invasive. Moreover, sensors have to be suitably sealed. Tightness is important because the by-product layers within some applications may release hazardous and toxic substances. In addition, the sealing has to be operational so that the conveyed substances do not leak out with time. Furthermore, sensors imbedded in area of deposition risks may accumulate by-product depositions during its function which may cause dysfunctionality and therefore inaccurate measurement results. As example, US2003/033870 describes a system for monitoring the presence of deposits or build-up on the inner wall of a pipe containing fluid.

One of the objectives of the present invention is therefore to propose a device or a method for monitoring the deposition of by-products that solve at least partially one of the previous above mentioned disadvantages.

To this end, the invention is defined by a vacuum pump or a vacuum line according to claim 1 and a method according to claim 9.

An example vacuum apparatus comprises a vacuum enclosure having a circumferential surface and an inner volume to be placed under vacuum wherein it further comprises:
- at least one guided surface acoustic waves device comprising at least a piezo-electric transducer for coupling surface acoustic waves on the circumferential surface and for detecting surface acoustic waves propagating along the circumferential surface, the at least one piezo-electric transducer being arranged outside of the vacuum enclosure,
- a control unit configured to control the at least one piezo-electric transducer to monitor a variation of at least one parameter of a surface acoustic wave propagating along the circumferential surface of the vacuum enclosure to detect a by-products deposition on the inner surface of the circumferential surface and/or to determine the properties of the by-product deposition.

The conductance of the vacuum enclosure is not affected by the guided surface acoustic waves device as it is arranged outside of the vacuum enclosure. It is a non-invasive measurement technology which therefore has no impact in terms of functionality and performance. Moreover, it can thus be possible to determine information of the by-products deposition without necessarily knowing in advance the composition of the deposit. In addition, as the vacuum apparatus is under vacuum, the signal received by the piezo electric transducer receiver only contains surface acoustic wave that propagate through the circumferential surface of the vacuum enclosure. Any wave transmission through the inner volume of the vacuum apparatus can be completely neglected throughout the whole measurement procedure, because no signal transmission might occur due to the low pressure inside the vacuum enclosure. Moreover, the vacuum apparatus is miniaturized so that it may be implemented everywhere in the vacuum line and separated from its electronics which might be connected via appropriate cables. The vacuum apparatus is thus highly flexible in its application and place of operation.

The vacuum apparatus can also have one or more of the features described below, taken individually or in combination.

The at least one piezo-electric transducer might be made of piezoceramic material. It is therefore made of high temperature resistant material. Thereby the guided surface acoustic waves device, mounted for example directly on the exhaust pipe of a vacuum pump can be operated at high temperatures.

The vacuum enclosure might be of tubular shape.

The piezo-electric transducers might be positioned on opposite locations on the outer diameter of the tube.

The piezo-electric transducer emitter might be configured to excite circumferential surface acoustic waves in opposite directions around the tube that arrive at piezo-electric transducer receiver.

A parameter of a surface acoustic wave propagating between said piezo-electric transducers might be the transmission time.

At least one additional parameter of the surface acoustic wave might be chosen among the wave transmission velocity and/or the amplitude and/or the pattern of a surface acoustic wave.

Said piezo-electric transducers might be configured to excite circumferential surface acoustic waves with a wavelength corresponding to a Lamb wave type. The Lamb-type wave is mainly the antisymmetric type which might be the most suitable mode to be used here for the vacuum apparatus.

The control unit might be configured to also receive information of the temperature of the vacuum enclosure.

Another object of the invention is a vacuum pump, such as a turbomolecular pump or a rough vacuum pump characterized in that it comprises at least one vacuum apparatus as previously described.

The at least one vacuum apparatus might be arranged at the exhaust of the vacuum pump.

Another example is a vacuum line comprising at least one vacuum apparatus as previously described.

The vacuum line might comprise:
- at least one vacuum apparatus connected to a dead-end pipe arranged in front of a sensor of the vacuum line, and/or
- at least one vacuum apparatus connected downstream of an outlet of a rough-vacuum pump of the vacuum line, and/or
- at least one vacuum apparatus connected to a pipe arranged between a turbomolecular pump and a rough-vacuum pump of the vacuum line.

Another example is a method for monitoring a deposition of by-products using a vacuum apparatus as previously described, wherein a variation of at least one parameter of a surface acoustic wave of a guided surface acoustic waves device propagating along the circumferential surface of the vacuum enclosure is monitored to detect a by-products deposition on the inner surface of the circumferential surface and/or to determine the properties of the by-product deposition.

The variation of at least one parameter of a surface acoustic wave propagating along the circumferential surface of the vacuum enclosure might be monitored for only one passage of the surface acoustic waves in front of the piezo-electric transducer receiver.

The variation of at least one parameter of a surface acoustic wave propagating along the circumferential surface of the vacuum enclosure might be monitored for at least two successive passages of the surface acoustic waves in front of the piezo-electric transducer receiver. For example, the different signal transmission times for various layer thicknesses can be summed up after each passage in order to help detecting layer thicknesses down to smaller values. The presence and thickness of the by-product deposition can be better determined based on the varying transmission times of the circumferential surface acoustic waves in more than one passage. By also taking the attenuation of the signals amplitude into account, by-product material characteristics like Young's modulus can also be determined. Due to this, it will not be mandatory to know the precise material properties before the actual measurement and the guided surface acoustic waves device is capable to determine the material with a sufficient accuracy. The range of by-products can vary from polymer like materials to salt like materials and therefore the transmission time and attenuation of the signal - received by the piezo-electric transducer - may also vary in a wide range. The layer thickness and the material properties can thus be known with help of this non-invasive sensor technology.

The method might comprise a preliminary step of calibration in which the propagation of two surface acoustic waves is first analyzed on a clean vacuum enclosure.

Other objects, characteristics, and advantages of the present invention appear from the following description of particular embodiments, made with reference to the accompanying drawings, in which:
FIG.1 is a schematic view of an example of an equipment for semiconductor or coating processes.
FIG. 2 is a schematic view of an embodiment of a vacuum apparatus of the vacuum line of the equipment of Figure 1.
FIG. 3A is a schematic view of a cross-section of the vacuum apparatus of figure 2 with a schematic representation of the propagation of two surface acoustic waves on a clean vacuum enclosure.
FIG. 3B is a similar view of the vacuum apparatus of figure 3A with a schematic representation of the propagation of two surface acoustic waves for a vacuum enclosure having a deposition of by-products on its inner surfaces.
FIG. 4 is a graphic showing the amplitude (in Volt) of the signal of the piezo-electric transducer receiver as a function of the time (in sec) for a vacuum enclosure without deposition (curve A) and with deposition (curve B).

In the figures, identical elements have the same reference numbers. The drawings in the figures are simplified for ease of understanding.

The following embodiments are examples. Although the description refers to one or more embodiments, this does not necessarily mean that each reference relates to the same embodiment, or that the features only apply to a single embodiment. Simple features of different embodiments can also be combined or interchanged to provide other embodiments.

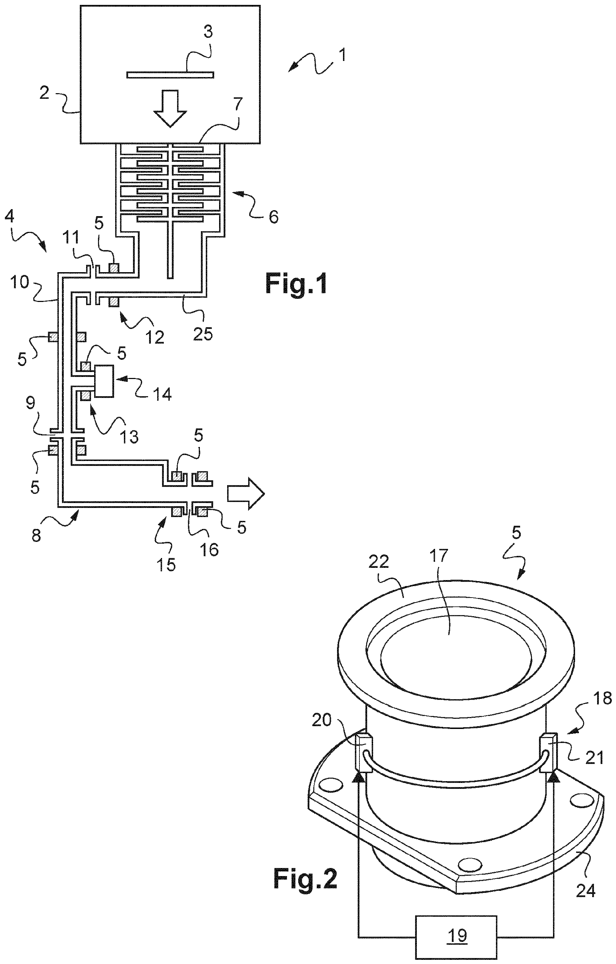

Figure 1 shows an embodiment of an equipment 1 for semiconductor or coating processes.

The equipment 1 comprises a process chamber 2 configured to receive and process at least one substrate 3, such as a wafer in a semiconductor process or such as a flat panel display in a coating process. The process chamber 2 is connected to a vacuum line 4 comprising at least one vacuum apparatus 5.

Pumps and associated evacuation canalization used in environment with corrosive gases need to be kept at high temperature, in some cases above 100 °C, in order to minimize by-product deposition risks within. The by-product deposition reaction rate is related to the phase transition characteristic curve of the gas, where solidification rate is higher at higher pressure and lower temperature. This risk is higher at exhaust of the pump where the gas pressure is highest after the pump compression stage.

The vacuum apparatus 5 is preferably suitable for an use in high temperature application (more than 100 °C) and therefore, as it will be described later, the piezo-electric transducers themselves 20, 21 might be made up of high temperature resistant components.

For example, the vacuum line 4 comprises a turbomolecular pump 6 whose inlet 7 is connected to the process chamber 2, and a rough-vacuum pump 8, whose inlet 9 is connected via a pipe 10 to the outlet 11 of the turbomolecular pump 6. The turbomolecular pump 6 is mounted upstream and in series connection with the rough-vacuum pump 8. "Upstream" has to be understood according to the direction of the pumped gases (see arrows in figure 1).

Different locations are possible for the vacuum apparatus 5.

The vacuum apparatus 5 may be arranged inside the turbomolecular pump 6, for example at the exhaust 12 of the turbomolecular pump 6, or on a pipe 10, arranged downstream of the outlet 11, between the turbomolecular pump 6 and the rough-vacuum pump 8.

As an alternative or in complement, the vacuum apparatus 5 can be connected to a dead-end pipe 13 arranged in front of a sensor 14 of the vacuum line 8, such as a pressure sensor.

As an alternative or in complement, the vacuum apparatus 5 can be connected at the inlet 9 or at the exhaust 15 of the rough-vacuum pump 8, inside the rough-vacuum pump 8 or outside, for example on a pipe of the vacuum line 4 downstream of an outlet 16 of the rough-vacuum pump 8.

More visible in Figure 2, the vacuum apparatus 5 comprises a vacuum enclosure 17 having a circumferential surface, such as for example a metallic wall, such as stainless steel, and an inner volume to be placed under vacuum, that is to say under a pressure below the atmospheric pressure.

The vacuum apparatus 5 further comprises at least one guided surface acoustic waves device 18 and a control unit 19.

The guided surface acoustic waves device 18 comprises at least a piezo-electric transducer 20, 21 for coupling surface acoustic waves on the circumferential surface and for detecting surface acoustic waves propagating along the circumferential surface.

The guided surface waves device 18 might comprises at least a piezo-electric transducer emitter 20 for coupling surface acoustic waves on the circumferential surface and at least a piezo-electric transducer receiver 21 for detecting surface acoustic waves propagating along the circumferential surface. The surface acoustic waves emitted by the piezo-electric transducer emitter 20 can thus be detected by the piezo-electric transducer receiver 21.

As an alternative, the piezo-electric transducer emitter 20 and the piezo-electric receiver 21 are formed by only one piezo-electric transducer 20, 21 which is configured to be operated alternately as emitter or receiver.

The at least one piezo-electric transducer 20, 21 might be made of high temperature resistant material, such as a piezoceramic material as PIC 255. Thereby the guided surface acoustic waves device 18, mounted for example directly on the exhaust pipe of a vacuum pump 6, 8, can be operated at high temperatures (> 100 °C).

The piezo-electric transducers 20, 21 are arranged outside of the vacuum enclosure 17, on the circumferential of the vacuum enclosure 17. Therefore, the method is non-invasive and do not create pressure or tightness losses. The pumping capacity is not affected by the guided surface acoustic waves device 18.

The vacuum enclosure 17 may be of tubular shape. The circumferential surface of the vacuum enclosure 17 might thus be cylindrical.

It can be realized as a vacuum flange standard used to connect vacuum chambers, tubing and vacuum pumps to each other in the vacuum line 4, such as the ISO standard quick release known by the name DN, as illustrated in Figure 2. It has for example an inner diameter of 40mm. The vacuum enclosure 17 has for example a flange 22 that can be joined to another flange by a centering ring and an elastomeric O-ring gasket.

This vacuum flange standard can be the one used for forming the exhaust 12 of the turbomolecular pump 6, the opposite part 24 of the flange 22 being connected to a housing 25 of the turbomolecular pump 6. Thus, the vacuum enclosure 17 is formed by the tube of the exhaust of the turbomolecular pump 6, without changing existing housings 25.

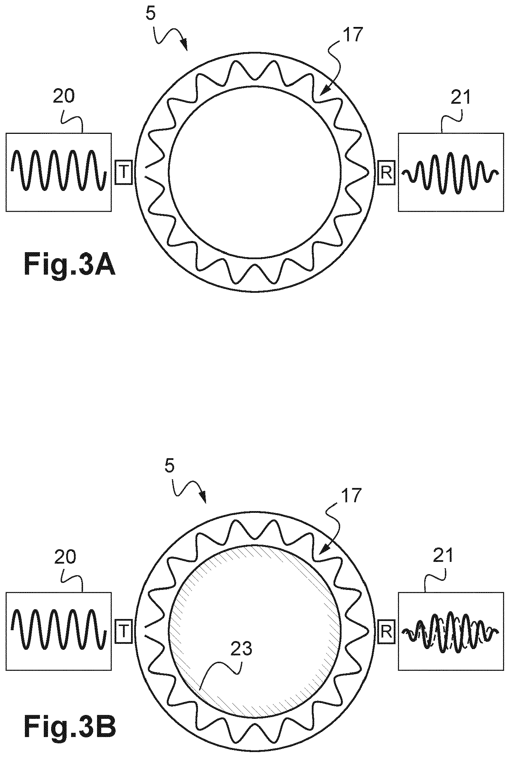

The control unit 19 is configured to control the at least one piezo-electric transducer 20, 21 to monitor a variation of at least one parameter of a surface acoustic wave propagating along the circumferential surface of the vacuum enclosure 17, between said piezo-electric transducers emitter 20 and receiver 21 to detect a by-products deposition 23 on the inner surface of the circumferential surface and/or to determine the properties of the by-product deposition 23 (Figure 3B).The control unit 19 comprises one or more controllers or processors and a memory. It can be common to several pairs of piezo-electric transducer receiver 21 and emitter 20.

The at least one parameter of a surface acoustic wave propagating between said piezo-electric transducers 20, 21 can be chosen among the wave transmission velocity and/or the transmission time and/or the amplitude and/or the pattern of a surface acoustic wave. The parameter used a main indicator is for example the time transmission.

Time shifts and possible amplitude changes can be observed due to the presence of a deposition of by-products 23 on the inner surface of the vacuum enclosure 17 with respect to a clean tube. The thickness of the by-product deposition can be determined based on the varying transmission times of the circumferential surface acoustic wave. The decreasing of the transmission time can be due to the increasing thickness of a deposition of by-products 23 for example.

When the vacuum enclosure 17 is of tubular shape and when there is two piezo-electric transducers 20, 21, the piezo-electric transducers 20, 21 might be positioned on opposite locations on the outer diameter of the tube (diametrically arranged) as it is shown in Figure 2. The piezo-electric transducer emitter 20 and the piezo-electric transducer receiver 21 are then positioned in circumferential direction around the vacuum enclosure 17, 180° opposite to each other.

The piezo-electric transducer emitter 20 might be configured to excite circumferential surface acoustic waves in opposite directions around the tube that arrive at piezo-electric transducer receiver 21 (Figures 3A, 3B). The wavelength corresponds for example to a Lamb-type wave. Both surface acoustic waves should arrive at the piezo-electric transducer receiver 21 at the same time when the vacuum enclosure 17 is clean.

The Lamb-type wave is mainly the antisymmetric type which might be the most suitable mode to be used here for the vacuum apparatus 5. The piezo-electric transducer 20 excites the surface acoustic waves for example with a frequency between 100 and 800 kHz. This value depends on the geometric configuration of the vacuum enclosure 17 and the characteristics of the by-products deposition 23. In addition, this excitation frequency and a tubular shape of the vacuum enclosure 17, favor the formation of Lamb-waves in circumferential directions. With help of these adjustments, the measurement accuracy down to several tenth of a Millimeter by-product layer thickness can be achieved.

The variation of at least one parameter of a surface acoustic wave propagating along the circumferential surface of the vacuum enclosure 17, between the piezo-electric transducer emitter 20 and the piezo-electric transducer receiver 21 can be monitored for just one passage C1 of the surface acoustic waves in front of the piezo-electric transducer receiver 21.

The variation of at least one parameter of a surface acoustic wave propagating along the circumferential surface of the vacuum enclosure 17, between the piezo-electric transducer emitter 20 and the piezo-electric transducer receiver 21 can be monitored for at least two passages C1, C2, C3 of the surface acoustic waves in front of the piezo-electric transducer receiver 21. Multiple passages C1, C2, C3 of the guided surface acoustic waves can thus be taken into account, such as more than two passages.

The different signal transmission times for various layer thicknesses can be summed up after each passage in order to help detecting layer thicknesses down to smaller values.

This method is particularly effective with the configuration of two piezo-electric transducers 20, 21 positioned on opposite locations on the outer diameter of the tube.

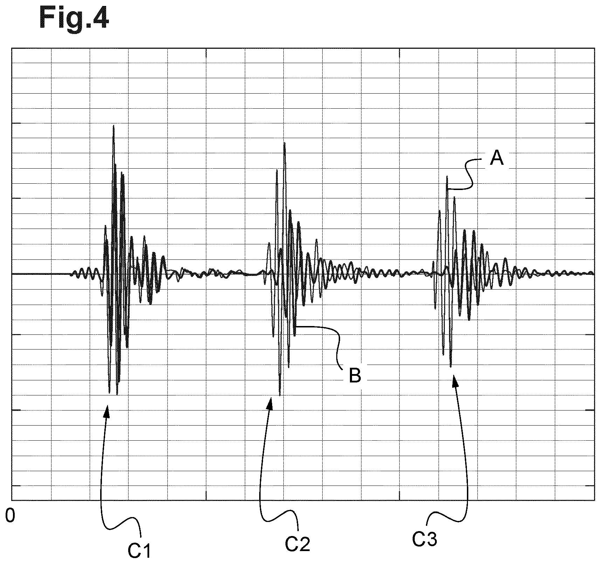

Figure 4 shows an example of signals of the piezo-electric transducer receiver for three passages C1, C2, C3 of the guided surface acoustic waves without deposition (curve A) and with deposition (curve B).

For the first passage C1, we can see that the amplitude of the signal of the piezo-electric transducer receiver of a vacuum enclosure 17 having deposition (curve B) is lower than the amplitude of the signal of the piezo-electric transducer receiver of a clean vacuum enclosure 17 (curve A). However, the distinction between the transmission times of both signals, with (curve B) and without by-product deposition (curve A), is very small and therefore is more difficult to see. In this case, it can be appropriate to monitor at least the variation of the transmission time for at least two passages C1, C2, C3 of the surface acoustic waves in front of the piezo-electric transducer receiver 21. This "multiple detection" may help to achieve a higher measurement accuracy in case of small by-product deposition (thickness < 0,3 mm). But when it comes to larger by-product deposition (thickness > 0,3 mm), only one signal circulation might be enough to measure a sufficient time shift of the received signal.

Thus, for the first three passages C1, C2, C3 of the signal, we can see that the amplitude of the signal decreases as the number of passages C1, C2, C3 of the signal increases. This is the case for both vacuum enclosures 17. However, the amplitude decreases more for the signal of the piezo-electric transducer receiver of a vacuum enclosure 17 with deposition (curve B) than for the clean vacuum enclosure 17 (curve A).

Moreover, the transmission time is quite constant or slightly decreasing as the number of the passages C1-C3 increases for the clean vacuum enclosure 17 (curve A) while it increases with the number of passages C1-C3 for the vacuum enclosure 17 with by-product deposition 23 (curve B).

The presence and thickness of the by-product deposition 23 can be better determined based on the varying transmission times of the circumferential surface acoustic waves in more than one passage. By also taking the attenuation of the signals amplitude into account, by-product material characteristics like Young's modulus can also be determined. Due to this, it will not be mandatory to know the precise material properties before the actual measurement and the guided surface acoustic waves device 18 is capable to determine the material with a sufficient accuracy. The range of by-products can vary from polymer like materials to salt like materials and therefore the transmission time and attenuation of the signal - received by the piezo-electric transducer 21 - may also vary in a wide range. The layer thickness and the material properties can thus be known with help of this non-invasive sensor technology.

As an example of realization, said piezo-electric transducers 20, 21 are configured to excite plane surface acoustic waves. For example, the piezo-electric transducers 20, 21 have a two-finger electrode structure to excite plane surface acoustic waves perpendicular to the electrode fingers. The orientation of the piezo-electric transducers 20, 21 may be chosen such that they excite plane surface acoustic waves predominantly travelling circumferentially in both directions around the tube.

According to an embodiment, the control unit 19 is configured to also receive information of the temperature of the vacuum enclosure 17. It is therefore possible to compensate the influence of temperature on the measurements to determine features of the deposition of by-products 23 deposited on the inner surface of the vacuum enclosure 17, independently of the temperature of the vacuum enclosure 17.

We will now describe an example of the functioning of the vacuum apparatus 1 with respect to figures 3A and 3B.

The method can comprise a preliminary step of calibration wherein the propagation of the two surface acoustic waves is first analyzed on a clean vacuum enclosure 17 (Figure 3A).

The piezo-electric transducers 20, 21 excite plane surface acoustic waves predominantly travelling circumferentially in both directions around the tube. Both surface acoustic waves should arrive at the piezo-electric transducer receiver 6 at the same time. At least one parameter of a surface acoustic wave propagating between said piezo-electric transducers 20, 21 chosen among the wave transmission velocity and/or the transmission time and/or the amplitude and/or the pattern of a surface acoustic wave, is recorded.

In a consecutive step of monitoring, the piezo-electric transducers 20, 21 are controlled to monitor a variation of said at least one parameter of a surface acoustic wave propagating between said piezo-electric transducers 20, 21, to detect a by-products deposition on the inner surface of the vacuum enclosure 17 or to determine the properties of the by-product deposition. The variation of the at least one parameter of a surface acoustic wave propagating along the circumferential surface of the vacuum enclosure 17 may be monitored for at least two successive passages of the surface acoustic waves in front of the piezo-electric transducer receiver 21.

Therefore, we understand from the above that the conductance of the vacuum enclosure 17 is not affected by the guided surface acoustic waves device 18 as it is arranged outside of the vacuum enclosure 17. It is a non-invasive measurement technology which therefore has no impact in terms of functionality and performance. Moreover, it can thus be possible to determine information of the by-products deposition 23 without necessarily knowing in advance the composition of the deposit. In addition, as the vacuum apparatus 5 is under vacuum, the signal received by the piezo electric transducer receiver 21 only contains surface acoustic wave that propagate through the circumferential surface of the vacuum enclosure 17. Any wave transmission through the inner volume of the vacuum apparatus 5 can be completely neglected throughout the whole measurement procedure, because no signal transmission might occur due to the low pressure inside the vacuum enclosure 5. Moreover, the vacuum apparatus 5 is miniaturized so that it may be implemented everywhere in the vacuum line 4 and separated from its electronics which might be connected via appropriate cables. The vacuum apparatus 5 is thus highly flexible in its application and place of operation.

## Claims

1. Vacuum pump (6, 8), such as a turbomolecular pump (6) or a rough vacuum pump (8), or vacuum line (4) comprising at least one vacuum apparatus (5) comprising a vacuum enclosure (17) having a circumferential surface and an inner volume under vacuum further comprising:
- at least one guided surface acoustic waves device (18) comprising a piezo-electric transducer receiver (21) and a piezo-electric transducer emitter (20) been positioned on opposite locations on the outer diameter of the vacuum enclosure (17) of tubular shape or the piezo-electric transducer emitter (20) and the piezo-electric receiver (21) being formed by only one piezo-electric transducer (20, 21) which is configured to be operated alternately as emitter or receiver, for coupling surface acoustic waves on the circumferential surface and for detecting surface acoustic waves propagating along the circumferential surface, the piezo-electric transducers (20, 21) being arranged outside of the vacuum enclosure (17),
- a control unit (19) configured to control the piezo-electric transducers (20, 21) to monitor a variation of at least one parameter of a surface acoustic wave propagating along the circumferential surface of the vacuum enclosure (17) to detect a by-products deposition (23) on the inner surface of the circumferential surface and/or to determine the properties of the by-product deposition (23), the piezo-electric transducers (20, 21) being made of piezoceramic material, wherein the variation of at least one parameter of a surface acoustic wave propagating along the circumferential surface of the vacuum enclosure (17) is monitored for at least two successive passages (C1, C2, C3) of the surface acoustic waves in front of the piezo-electric transducer receiver (21).

2. Vacuum pump (6, 8) or vacuum line (4) according to claim 1, wherein the vacuum enclosure (17) is of tubular shape and the piezo-electric transducers (20, 21) are positioned on opposite locations on the outer diameter of the tube.

3. Vacuum pump (6, 8) or vacuum line (4) according to claim 2, wherein the piezo-electric transducer emitter (20) is configured to excite circumferential surface acoustic waves in opposite directions around the tube that arrive at piezo-electric transducer receiver (21).

4. Vacuum pump (6, 8) or vacuum line (4) according to one of the previous claims, wherein a parameter of a surface acoustic wave propagating between said piezo-electric transducers (20, 21) is the transmission time.

5. Vacuum pump (6, 8) or vacuum line (4) according to the previous claim, wherein at least one additional parameter of the surface acoustic wave is chosen among the wave transmission velocity and/or the amplitude and/or the pattern of a surface acoustic wave.

6. Vacuum pump (6, 8) or vacuum line (4) according to one of the previous claims, wherein said piezo-electric transducers (20, 21) are configured to excite circumferential surface acoustic waves with a wavelength corresponding to a Lamb wave type.

7. Vacuum pump (6, 8) according to one of the previous claims, wherein the vacuum pump (6, 8) comprises an exhaust (12, 15) and the at least one vacuum apparatus (5) is arranged at the exhaust (12, 15) of the vacuum pump (6, 8).

8. Vacuum line (4) according to one of claims 1 to 6, wherein it comprises :
- a dead-end pipe (13) and a sensor (14) wherein the at least one vacuum apparatus (5) is connected to the dead-end pipe (13) arranged in front of the sensor (14) of the vacuum line (4), and/or
- a rough-vacuum pump (8) with an outlet, wherein the at least one vacuum apparatus (5) is connected downstream of the outlet (16) of the w rough-vacuum pump (8) of the vacuum line (4), and/or
- a pipe, a turbomolecular pump, a rough-vacuum pump, wherein the at least one vacuum apparatus (5) is connected to the pipe (10) arranged between the turbomolecular pump (6) and the rough-vacuum pump (8) of the vacuum line (4).

9. Method for monitoring a deposition of by-products using a vacuum apparatus (5) in a pump (6, 8) or in a vacuum line (4) according to one of claim 1 to 8, wherein a variation of at least one parameter of a surface acoustic wave of a guided surface acoustic waves device (18) propagating along the circumferential surface of the vacuum enclosure (17) is monitored to detect a by-products deposition (23) on the inner surface of the circumferential surface and/or to determine the properties of the by-product deposition (23) and wherein the variation of at least one parameter of a surface acoustic wave propagating along the circumferential surface of the vacuum enclosure (17) is monitored for at least two successive passages (C1, C2, C3) of the surface acoustic waves in front of a piezo-electric transducer receiver (21), the piezo-electric transducers receiver (21) and a piezo-electric transducer emitter (20) been positioned on opposite locations on the outer diameter of the vacuum enclosure (17) of tubular shape or the piezo-electric transducer emitter (20) and the piezo-electric receiver (21) being formed by only one piezo-electric transducer (20, 21) which is configured to be operated alternately as emitter or receiver.

10. Method according to claim 9, wherein it comprises a preliminary step of calibration in which the propagation of two surface acoustic waves is first analyzed on a clean vacuum enclosure (17).

11. Method according to claim 9 or 10, wherein the control unit (19) is configured to also receive information of the temperature of the vacuum enclosure (17).

## Patentansprüche

1. Vakuumpumpe (6, 8), wie etwa eine Turbomolekularpumpe (6) oder eine Grobvakuumpumpe (8), oder Vakuumleitung (4), die mindestens eine Vakuumvorrichtung (5) umfasst, die ein Vakuumgehäuse (17) umfasst, das eine Umfangsfläche und ein Innenvolumen unter Vakuum aufweist, die ferner Folgendes umfasst:
- mindestens eine Vorrichtung (18) für geführte akustische Oberflächenwellen, die einen piezoelektrischen Wandlerempfänger (21) und einen piezoelektrischen Wandlersender (20) umfasst, die an gegenüberliegenden Orten an dem Außendurchmesser des rohrförmigen Vakuumgehäuses (17) positioniert sind, oder wobei der piezoelektrische Wandlersender (20) und der piezoelektrische Wandlerempfänger (21) nur durch einen piezoelektrischen Wandler (20, 21) gebildet sind, der konfiguriert ist, abwechselnd als Sender oder Empfänger zu arbeiten, um akustische Oberflächenwellen auf der Umfangsfläche zu koppeln und um akustische Oberflächenwellen, die sich entlang der Umfangsfläche ausbreiten, zu detektieren, wobei die piezoelektrischen Wandler (20, 21) außerhalb des Vakuumgehäuses (17) angeordnet sind,
- eine Steuereinheit (19), die konfiguriert ist, die piezoelektrischen Wandler (20, 21) zu steuern, eine Abweichung von mindestens einem Parameter einer akustischen Oberflächenwelle, die sich entlang der Umfangsfläche des Vakuumgehäuses (17) ausbreitet, zu überwachen, um eine Nebenproduktablagerung (23) auf der Innenfläche der Umfangsfläche zu detektieren und/oder um die Eigenschaften der Nebenproduktablagerung (23) zu bestimmen, wobei die piezoelektrischen Wandler (20, 21) aus piezoelektrischem Material hergestellt sind, wobei die Abweichung des mindestens einen Parameters einer akustischen Oberflächenwelle, die sich entlang der Umfangsfläche des Vakuumgehäuses (17) ausbreitet, für mindestens zwei aufeinanderfolgende Durchgänge (C1, C2, C3) der akustischen Oberflächenwellen vor dem piezoelektrischen Wandler (21) überwacht wird.

2. Vakuumpumpe (6, 8) oder Vakuumleitung (4) nach Anspruch 1, wobei das Vakuumgehäuse (17) rohrförmig ist und die piezoelektrischen Wandler (20, 21) an gegenüberliegenden Orten an dem Außendurchmesser des Rohrs positioniert sind.

3. Vakuumpumpe (6, 8) oder Vakuumleitung (4) nach Anspruch 2, wobei der piezoelektrische Wandlersender (20) konfiguriert ist, umlaufende akustische Oberflächenwellen in entgegengesetzten Richtungen um das Rohr, die bei dem piezoelektrischen Wandlerempfänger (21) ankommen, anzuregen.

4. Vakuumpumpe (6, 8) oder Vakuumleitung (4) nach einem der vorhergehenden Ansprüche, wobei ein Parameter einer akustischen Oberflächenwelle, die sich zwischen den piezoelektrischen Wandlern (20, 21) ausbreitet, die Übertragungszeit ist.

5. Vakuumpumpe (6, 8) oder Vakuumleitung (4) nach einem der vorhergehenden Ansprüche, wobei mindestens ein zusätzlicher Parameter der akustischen Oberflächenwelle unter der Wellenübertragungsgeschwindigkeit und/oder der Amplitude und/oder dem Muster einer akustischen Oberflächenwelle ausgewählt wird.

6. Vakuumpumpe (6, 8) oder Vakuumleitung (4) nach einem der vorhergehenden Ansprüche, wobei die piezoelektrischen Wandler (20, 21) konfiguriert sind, umlaufende akustische Oberflächenwellen mit einer Länge, die einem Lamb-Wellen-Typ entspricht, anzuregen.

7. Vakuumpumpe (6, 8) nach einem der vorhergehenden Ansprüche, wobei die Vakuumpumpe (6, 8) einen Auslass (12, 15) aufweist und die mindestens eine Vakuumvorrichtung (5) an dem Auslass (12, 15) der Vakuumpumpe (6, 8) angeordnet ist.

8. Vakuumleitung (4) nach einem der Ansprüche 1 bis 6, die Folgendes umfasst:
- ein Blindrohr (13) und einen Sensor (14), wobei die mindestens eine Vakuumvorrichtung (5) mit dem Blindrohr (13) verbunden ist, das vor dem Sensor (14) der Vakuumleitung (4) angeordnet ist, und/oder
- eine Grobvakuumpumpe (8) mit einem Auslass, wobei die mindestens eine Vakuumvorrichtung (5) auf der stromabwärts gelegenen Seite des Auslasses (16) der Grobvakuumpumpe (8) der Vakuumleitung (4) angeschlossen ist, und/oder
- ein Rohr, eine Turbomolekularpumpe, eine Grobvakuumpumpe, wobei die mindestens eine Vakuumvorrichtung (5) mit dem Rohr (10), das zwischen der Turbomolekularpumpe (6) und der Grobvakuumpumpe (8) der Vakuumleitung (4) angeordnet ist, verbunden ist.

9. Verfahren zum Überwachen einer Nebenproduktablagerung unter Verwendung einer Vakuumvorrichtung (5) in einer Pumpe (6, 8) oder in einer Vakuumleitung (4) nach einem der Ansprüche 1 bis 8, wobei eine Abweichung von mindestens einem Parameter einer akustischen Oberflächenwelle einer Vorrichtung (18) für geführte akustische Oberflächenwellen, die sich entlang der Umfangsfläche des Vakuumgehäuses (17) ausbreitet, überwacht wird, um eine Nebenproduktablagerung (23) auf der Innenfläche der Umfangsfläche zu detektieren und/oder die Eigenschaften der Nebenproduktablagerung (23) zu bestimmen, und wobei die Abweichung des mindestens einen Parameters einer akustischen Oberflächenwelle, die sich entlang der Umfangsfläche des Vakuumgehäuses (17) ausbreitet, für mindestens zwei aufeinanderfolgende Durchgänge (C1, C2, C3) der akustischen Oberflächenwellen vor einem piezoelektrischen Wandlerempfänger (21) überwacht wird, wobei der piezoelektrische Wandlerempfänger (21) und ein piezoelektrischer Wandlersender (20) an gegenüberliegenden Orten an dem Außendurchmesser des rohrförmigen Vakuumgehäuses (17) positioniert sind oder der piezoelektrische Wandlersender (20) und der piezoelektrische Wandlerempfänger (21) nur durch einen piezoelektrischen Wandler (20, 21) gebildet sind, der konfiguriert ist, abwechselnd als Sender oder Empfänger zu arbeiten.

10. Verfahren nach Anspruch 9, das einen vorhergehenden Schritt der Kalibrierung umfasst, in dem die Ausbreitung von zwei akustischen Oberflächenwellen zunächst auf einem sauberen Vakuumgehäuse (17) analysiert wird.

11. Verfahren nach Anspruch 9 oder 10, wobei die Steuereinheit (19) konfiguriert ist, auch Informationen über die Temperatur des Vakuumgehäuses (17) zu empfangen.

## Revendications

1. Pompe (6, 8) à vide, telle qu'une pompe turbomoléculaire (6) ou une pompe (8) à vide grossier, ou ligne (4) de vide comportant au moins un appareil (5) à vide comportant une enceinte (17) à vide ayant une surface circonférentielle et un volume intérieur sous vide, comportant en outre :
- au moins un dispositif (18) à ondes acoustiques de surface guidées comportant un récepteur (21) à transducteur piézo-électrique et un émetteur (20) à transducteur piézo-électrique qui sont positionnés à des emplacements opposés sur le diamètre extérieur de l'enceinte (17) à vide de forme tubulaire ou l'émetteur (20) à transducteur piézo-électrique et le récepteur piézo-électrique (21) étant formés par un seul transducteur piézo-électrique (20, 21) qui est configuré pour fonctionner de manière alternée comme émetteur ou récepteur, pour coupler des ondes acoustiques de surface sur la surface circonférentielle et pour détecter des ondes acoustiques de surface se propageant le long de la surface circonférentielle, les transducteurs piézo-électriques (20, 21) étant disposés à l'extérieur de l'enceinte (17) à vide,
- une unité (19) de commande configurée pour commander les transducteurs piézo-électriques (20, 21) afin de surveiller une variation d'au moins un paramètre d'une onde acoustique de surface se propageant le long de la surface circonférentielle de l'enceinte (17) à vide pour détecter un dépôt (23) de sous-produits sur la surface intérieure de la surface circonférentielle et/ou pour déterminer les propriétés du dépôt (23) de sous-produits, les transducteurs piézo-électriques (20, 21) étant formés de matériau piézo-céramique, la variation d'au moins un paramètre d'une onde acoustique de surface se propageant le long de la surface circonférentielle de l'enceinte (17) à vide étant surveillée pendant au moins deux passages successifs (C1, C2, C3) des ondes acoustiques de surface devant le récepteur (21) à transducteur piézo-électrique.

2. Pompe (6, 8) à vide ou ligne (4) de vide selon la revendication 1, dans laquelle l'enceinte (17) à vide est de forme tubulaire et les transducteurs piézo-électriques (20, 21) sont positionnés à des emplacements opposés sur le diamètre extérieur du tube.

3. Pompe (6, 8) à vide ou ligne (4) de vide selon la revendication 2, dans laquelle l'émetteur (20) à transducteur piézo-électrique est configuré pour exciter des ondes acoustiques de surface circonférentielle dans des directions opposées autour du tube qui arrivent au récepteur (21) à transducteur piézo-électrique.

4. Pompe (6, 8) à vide ou ligne (4) de vide selon une des revendications précédentes, dans laquelle un paramètre d'une onde acoustique de surface se propageant entre lesdits transducteurs piézo-électriques (20, 21) est le temps de transmission.

5. Pompe (6, 8) à vide ou ligne (4) de vide selon la revendication précédente, dans laquelle au moins un paramètre supplémentaire de l'onde acoustique de surface est choisi parmi la vitesse de transmission de l'onde et/ou l'amplitude et/ou la forme d'une onde acoustique de surface.

6. Pompe (6, 8) à vide ou ligne (4) de vide selon une des revendications précédentes, dans laquelle lesdits transducteurs piézo-électriques (20, 21) sont configurés pour exciter des ondes acoustiques de surface circonférentielle avec une longueur d'onde correspondant à un type d'onde de Lamb.

7. Pompe (6, 8) à vide selon une des revendications précédentes, dans laquelle la pompe (6, 8) à vide comporte un échappement (12, 15) et au moins un appareil (5) à vide est disposé à l'échappement (12, 15) de la pompe (6, 8) à vide.

8. Ligne (4) de vide selon une des revendications 1 à 6, celle-ci comportant :
- un tuyau (13) en cul-de-sac et un capteur (14) dans lequel le au moins un appareil (5) à vide est connecté au tuyau (13) en cul-de-sac disposé devant le capteur (14) de la ligne (4) sous vide, et/ou
- une pompe (8) à vide grossier dotée d'une sortie, dans laquelle le au moins un appareil (5) à vide est raccordé en aval de la sortie (16) de la pompe (8) à vide grossier de la ligne (4) sous vide, et/ou
- un tuyau, une pompe turbomoléculaire, une pompe à vide grossier, dans laquelle le au moins un appareil (5) à vide est connecté au tuyau (10) disposé entre la pompe turbomoléculaire (6) et la pompe (8) à vide grossier de la ligne (4) de vide.

9. Procédé de surveillance d'un dépôt de sous-produits utilisant un appareil (5) à vide dans une pompe (6, 8) ou dans une ligne (4) de vide selon une des revendications 1 à 8, dans lequel une variation d'au moins un paramètre d'une onde acoustique de surface d'un dispositif (18) à ondes acoustiques de surface guidées se propageant le long de la surface circonférentielle de l'enceinte (17) à vide est surveillée pour détecter un dépôt (23) de sous-produits sur la surface intérieure de la surface circonférentielle et/ou pour déterminer les propriétés du dépôt (23) de sous-produits et dans lequel la variation d'au moins un paramètre d'une onde acoustique de surface se propageant le long de la surface circonférentielle de l'enceinte (17) à vide est surveillée pendant au moins deux passages successifs (C1, C2, C3) des ondes acoustiques de surface devant un récepteur (21) à transducteur piézo-électrique, le récepteur (21) à transducteur piézo-électrique et un émetteur (20) à transducteur piézo-électrique étant positionnés à des emplacements opposés sur le diamètre extérieur de l'enceinte (17) à vide de forme tubulaire ou l'émetteur (20) à transducteur piézo-électrique et le récepteur piézo-électrique (21) étant formés par un seul transducteur piézo-électrique (20, 21) qui est configuré pour fonctionner de manière alternée comme émetteur ou récepteur.

10. Procédé selon la revendication 9, dans lequel celui-ci comporte une étape préliminaire d'étalonnage dans laquelle la propagation de deux ondes acoustiques de surface est d'abord analysée sur une enceinte (17) à vide propre.

11. Procédé selon la revendication 9 ou 10, dans lequel l'unité (19) de commande est configurée pour recevoir également des informations sur la température de l'enceinte (17) à vide.
